# EUROPÄISCHE PATENTSCHRIFT

(11) **EP 3 487 004 B1**
(45) Veröffentlichungstag und Bekanntmachung des Hinweises auf die Patenterteilung: **08.04.2020**
(21) Anmeldenummer: 18204247.3
(22) Anmeldetag: 05.11.2018
(51) Int. Cl.: H01R 4/38, H01R 4/64, H01R 4/48, H02G 13/00

(54) **BANDERDUNGSSCHELLE**
BELT GROUNDING CLAMP
COLLIER DE SERRAGE DE MISE À LA TERRE

(30) Priorität: 16.11.2017 DE 202017106973 U
(43) Veröffentlichungstag der Anmeldung: 22.05.2019
(73) Patentinhaber: OBO Bettermann Hungary Kft., 2347 Bugyi (HU)
(72) Erfinder: Bischoff, Martin, 58730 Fröndenberg (DE); Santa, Adam, 2310 Szigetszentmiklós (HU); Schmidt, Olaf, 59494 Soest (DE); Szalay, Zsolt, 1145 Budapest (HU); Trinkwald, Jürgen, 58710 Menden (DE)
(74) Vertreter: Köchling, Conrad-Joachim

(56) Entgegenhaltungen:
- EP-B1- 1 986 273
- US-A- 1 966 132
- US-A- 2 867 787

## Beschreibung

Die Erfindung betrifft eine Banderdungsschelle zum Blitzschutz-Potentialausgleich für den Einsatz in explosionsgefährdeten Bereichen mit mindestens einem mechanisch spann- und arretierbaren Spannband, das um einen zu kontaktierenden Abschnitt eines Rohres, einer Stange oder dergleichen elektrisch leitfähigen Teiles legbar ist, einem Kontaktkörper, der mit dem elektrisch leitfähigen Teil in Verbindung gebracht ist oder bringbar ist und einen Anschlussbereich für einen elektrischen Leiter aufweist, und einem Isolationsteil, wobei der Kontaktkörper von einem kappenartigen Gehäuse als Isolationsteil überdeckt ist, welches den Teil des Kontaktkörpers, der mit dem leitfähigen Teil in Verbindung steht sowie mindestens den Anschlussbereich für den Leiter freilässt,
wobei zwischen dem Kontaktkörper und dem diesen überdeckenden Gehäuse federnde Vorspannmittel angeordnet sind,
wobei das Spannband durch einen Spannkopf geführt ist, dessen Unterseite in mechanischer Pressverbindung mit einer Oberseite des Gehäuses steht.

Derartige Banderdungsschellen sind beispielsweise aus der EP 1 986 273 B1 bekannt. Bei der bekannten Vorrichtung wird als nachteilig angesehen, dass der Kontaktdruck zwischen dem Kontaktkörper und dem mit diesem in Verbindung gebrachten elektrisch leitfähigen Teil, dort beispielsweise Rohr, allein durch Anspannen des Spannbandes durch den Spannkopf erreicht wird. Es sind zwar noch zwischen dem Kontaktkörper und dem Isolationsteil in Form eines Gehäuses Federvorspannelemente vorgesehen, die einen ausreichenden Kontaktdruck bewirken sollen, jedoch ist der erzielbare Kontaktdruck in jedem Falle allein davon abhängig, ob und in welcher Form das Spannband mittels des Spannkopfes angespannt wird und angespannt werden kann.

Eine Verbesserung des Kontaktdruckes unabhängig vom Anspannen des Spannbandes ist hierbei nicht möglich.

Ausgehend von diesem Stand der Technik liegt der Erfindung die Aufgabe zugrunde, eine Banderdungsschelle gattungsgemäßer Art zu schaffen, bei der unabhängig von der Spannkraft des Spannbandes der Kontaktdruck zwischen dem Kontaktkörper und dem mit diesem in Verbindung stehenden elektrisch leitfähigen Teil verbessert und eingestellt werden kann.

Zur Lösung dieser Aufgabe schlägt die Erfindung vor, dass zwischen dem federnden Vorspannmittel und dem Kontaktkörper ein Spannbügel angeordnet ist und dass der Spannbügel bei gespanntem Spannband mittels das Gehäuse durchgreifender Stellmittel zur Erhöhung der Spannkraft des Spannbandes vom Kontaktkörper weg entgegen der Vorspannkraft der Vorspannmittel verstellbar ist.

Durch diese Anordnung wird eine Möglichkeit geschaffen, durch die der Kontaktkörper unabhängig von der Spannkraft des Spannbandes gegen das elektrisch leitfähige Teil anspannbar ist. Beim Gebrauch der entsprechenden Banderdungsschelle wird zunächst das Spannband um den zu kontaktierenden Abschnitt eines Rohres, einer Stange oder dergleichen elektrisch leitfähigen Teiles gelegt und mittels eines Spannkopfes angespannt. Anschließend kann mittels der das Gehäuse durchgreifenden Stellmittel der Spannbügel entgegen der Vorspannkraft der Vorspannmittel vom Kontaktkörper weg verstellt werden, wodurch der Kontaktdruck zwischen dem Kontaktkörper und dem von diesem kontaktierten elektrischen Teil erhöht wird. Die Einstellung der Vorspannkraft ist völlig unabhängig von der Einstellung der Spannkraft des Spannbandes und kann von dem Montierenden in geeigneter Weise eingestellt werden und auch nachgestellt werden, sofern dies erforderlich ist.

Es wird damit eine Banderdungsschelle zur Verfügung gestellt, die gerade in explosionsgefährdeten Bereichen eingesetzt werden kann und mittels derer jegliche elektrische Funkenentladung beispielsweise während eines Blitzstoßes unterbunden wird.

Um den Transport und die Montage zu vereinfachen und auch den richtigen Zusammenhang der Einzelteile sicherzustellen, ist vorgesehen, dass das Gehäuse mit dem Kontaktkörper rastverbunden ist.

Eine besonders bevorzugte Ausbildung wird darin gesehen, dass der Kontaktkörper im Querschnitt T-förmig ausgebildet ist, wobei der Quersteg der T-Form der Anlagebereich für das elektrisch leitfähige Teil, vorzugsweise mit einer Positionierungskerbe ist und der dazu rechtwinklige Vertikalsteg vom Gehäuse übergriffen ist, wobei der Vertikalsteg von dem U-förmig ausgebildeten Spannbügel übergriffen ist, der mit seinen Schenkeln am Vertikalsteg geführt ist.

Diese Ausgestaltung ist besonders günstig für die Funktion und das Zusammenführen der Teile. Der Querschnitt der T-Form bildet einen relativ großen Anlagebereich für das jeweilige elektrisch leitfähige Teil. Gegebenenfalls kann dieser Quersteg an seiner Unterseite mit einer Positionierungskerbe oder dergleichen versehen sein, um die Mittelposition anzuzeigen und eine Hilfe für die Positionierung des elektrisch leitfähigen Teiles zu bilden. Der Vertikalsteg dient als Aufnahme- und Montagehilfe sowie Führung für den U-förmig ausgebildeten Spannbügel, der mit seinen Schenkeln an den Vertikalsteg entsprechend der Spannrichtung verstellbar geführt ist.

Eine zudem bevorzugte Ausgestaltung wird darin gesehen, dass an den seitlichen Enden des Vertikalsteges jeweils Führungsstege angeordnet sind, die quer zu dem Vertikalsteg gerichtet verlaufen und über den Vertikalsteg entgegengerichtet zum Quersteg vorragen, wobei zwischen den Führungsstegen Querwände des Gehäuses geführt sind, die der Querabmessung des Vertikalsteges angepasste, stirnseitig auf ihrer der Oberseite des Gehäuses abgewandten Randkante offen ausmündende Ausnehmungen aufweisen, wobei nahe der Ausmündungen der Ausnehmungen an den die Ausnehmungen begrenzenden Randkanten Rastvorsprünge angeordnet sind, die in Montagesolllage hinter Rastkanten des Vertikalsteges greifen, und wobei vorzugsweise außen an den Querwänden vorragende Führungsleisten ausgebildet sind, zwischen denen die Führungsstege geführt sind.

Diese Ausgestaltung dient insbesondere der Positionierung und Führung der Einzelelemente, um diese in die vorgesehene Solllage zu führen und in dieser zu halten. Zwischen den Führungsstegen sind die Querwände des Gehäuses geführt, sodass das Gehäuse in einfacher Weise richtig positioniert aufgesteckt werden kann. Die an den Ausmündungen der Ausnehmungen vorgesehenen Rastvorsprünge dienen zur rastenden Arretierung der Teile aneinander, sodass die Teile in der Solllage, auch wenn die Teile noch nicht endgültig am Montageort montiert sind, zusammengehalten sind und nicht in die Einzelelemente auseinanderfallen können.

Die außen an den Querwänden vorragenden Führungsleisten dienen vor allem dazu, dass das Gehäuse nicht quer zum Kontaktkörper verrutschen kann.

Besonders bevorzugt ist zudem vorgesehen, dass die federnden Vorspannmittel aus Tellerfederpaketen bestehen.

Zudem ist vorgesehen, dass die federnden Vorspannmittel an Rastzapfen gehalten sind, die innenseitig von einer Oberseite des Gehäuses in Richtung zum Kontaktkörper abragen.

Eine besonders bevorzugte Ausgestaltung wird darin gesehen, dass die Stellmittel Kopfschrauben sind, die entsprechende Lochungen einer Oberseite des Gehäuses durchgreifen und in Gewindebohrungen des Spannbügels eingeschraubt sind, wobei sich die dem Kopf abgewandten Enden der Kopfschrauben am Kontaktkörper, insbesondere der Stirnseite eines Vertikalsteges eines T-förmigen Kontaktkörpers, abstützen.

Hierdurch ist eine einfache Betätigung der Stellmittel ermöglicht, wobei beim Einschrauben der Stellmittel in die Gewindebohrung des Spannbügels der Kontaktkörper durch die Enden der Schrauben zur Erhöhung der Vorspannung wegbewegt wird.

Um eine möglichst gleichmäßige Beaufschlagung durch die Stellmittel sicherzustellen, ist vorgesehen, dass die Stellmittel nahe der seitlichen Endbereiche des Gehäuses angeordnet sind und die federnden Vorspannmittel zwischen den Stellmitteln angeordnet sind.

Um eine gute Zugänglichkeit der Elemente zu erreichen, ist vorgesehen, dass die Stellmittel seitlich neben dem etwa mittig der Längserstreckung des Gehäuses angebrachten Spannkopf angeordnet sind.

Eine weitere Besonderheit wird darin gesehen, dass der Quersteg der T-Form des Kontaktkörpers jeweils mittig seiner Längserstreckung eine Ausnehmung aufweist, dass das Gehäuse mit seinen Seitenwänden bis zu dem Quersteg reicht und im Bereich der Ausnehmungen einen verlängerten nach Art eines Federarms ausgebildeten Wandteil aufweist, der bis über den Quersteg vorragt und eine Führungsfläche für das Spannband bildet.

Die entsprechenden Ausnehmungen sind vor allem dafür gedacht, dass das Spannband besser geführt werden kann, wobei das Spannband in der Solllage durch den verlängerten Wandteil sicher in der Weise geführt ist, dass es nicht in Kontakt mit dem Kontaktkörper gerät.

Um eine einwandfreie Funktion sicherzustellen, kann zudem vorgesehen sein, dass der Spannbügel Durchgriffslöcher aufweist, die einen Bewegungsfreiraum für die Rastzapfen bilden, auf denen die federnden Vorspannmittel gehalten sind.

Zudem kann vorgesehen sein, dass an einem der Führungsstege und dem Vertikalsteg ein seitlich etwa parallel zum Vertikalsteg abragendes Anschlussteil angeschlossen oder angeformt ist, das den Anschlussbereich für den elektrischen Leiter aufweist.

Hierdurch ist es in einfacher Weise möglich, elektrische Anschlussleiter an dem Anschlussbereich zu montieren, beispielsweise mittels Klemmschrauben oder dergleichen.

Sämtliche beschriebenen Elemente bestehen vorzugsweise aus Edelstahl. Lediglich der Kontaktkörper besteht aus einem Metalldruckgussteil, welches vorzugsweise oberflächenverzinnt ist. Das kappenartige Gehäuse besteht aus einem geeigneten Kunststoffmaterial, welches elektrisch isolierende Eigenschaften hat.

Ein Ausführungsbeispiel der Erfindung ist in der Zeichnung dargestellt und im Folgenden näher beschrieben.

Es zeigt:
- Figur 1: eine Explosionsdarstellung einer erfindungsgemäßen Banderdungsschelle;
- Figur 2: eine isometrische Ansicht einer komplett zusammengebauten Banderdungsschelle;
- Figur 3: die Banderdungsschelle in einer Ansicht von hinten gesehen;
- Figur 4: die Banderdungsschelle im Mittellängsschnitt gesehen;
- Figur 5: die Banderdungsschelle von einer Stirnseite her gesehen;

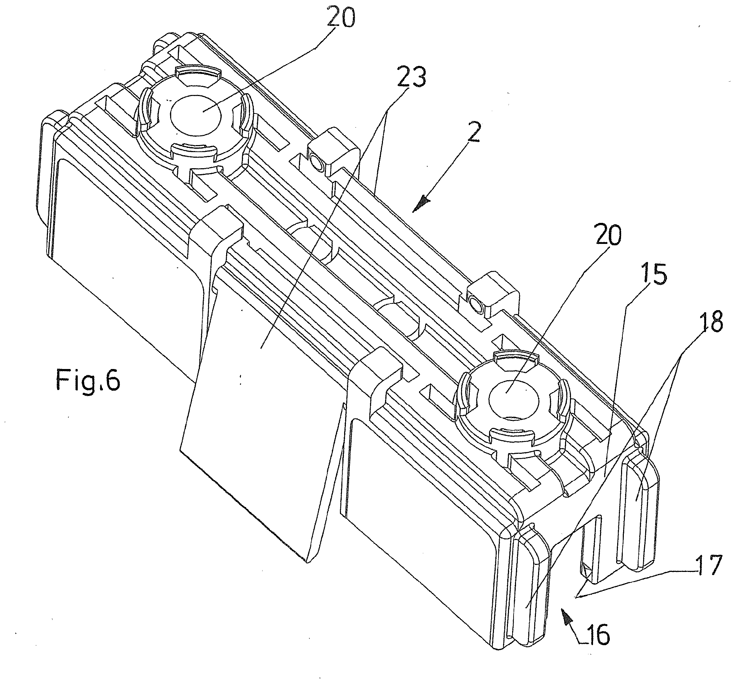

- Figur 6: das Isolationsteil in Form eines kappenartigen Gehäuses in isometrischer Darstellung;
- Figur 7: das Gehäuse im Mittellängsschnitt gesehen;
- Figur 8: eine Einzelheit der Figur 4 in vergrößerter Darstellung;

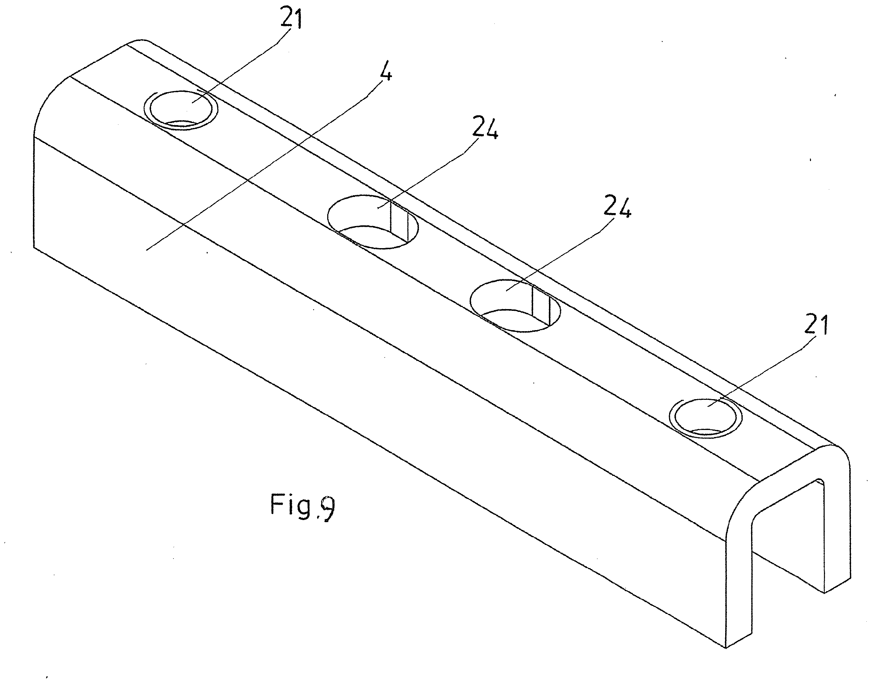

- Figur 9: einen Spannbügel in isometrischer Ansicht;
- Figur 10: einen Kontaktkörper in isometrischer Ansicht.

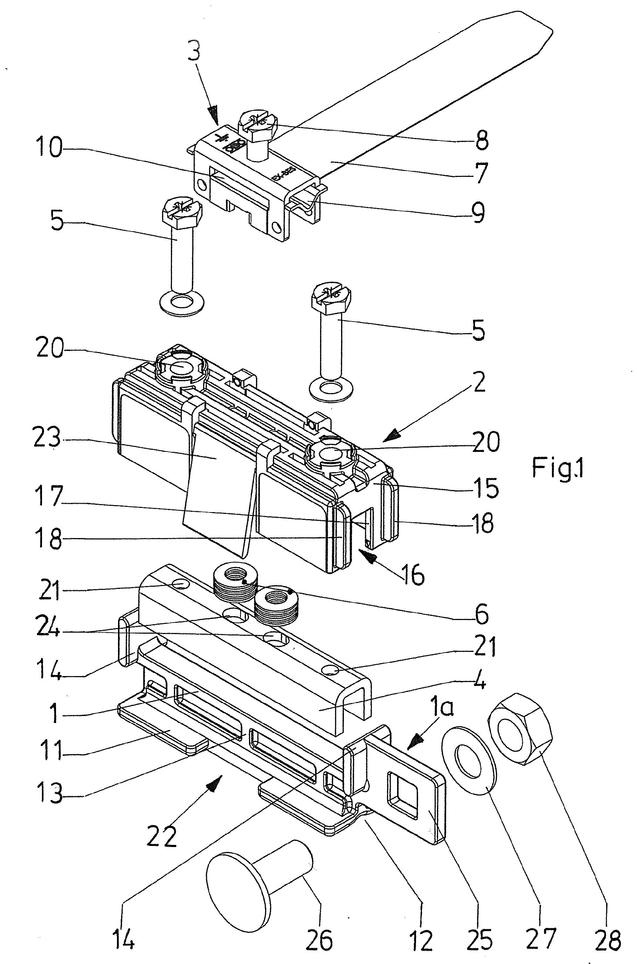

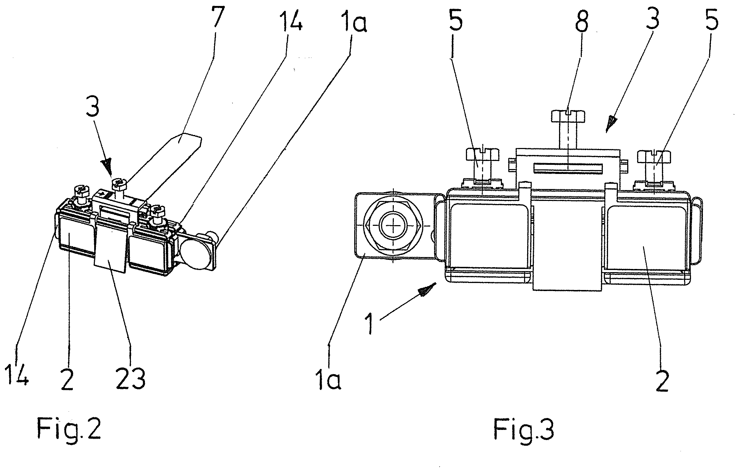

Eine Ausführungsform einer erfindungsgemäßen Banderdungsschelle ist in Figur 1 in Explosionsdarstellung und in Figur 2 bis 5 in der Zusammenbaulage gezeigt.

Sie dient zum Blitzschutzpotentialausgleich für den Einsatz in explosionsgefährdeten Bereichen und ist mit mindestens einem mechanisch spannbaren und arretierbaren Spannband 7 ausgestattet, das in der Einbausolllage um einen zu kontaktierenden Abschnitt eines Rohres, einer Stange oder dergleichen elektrisch leitfähigen Teiles geschlungen werden kann.

Ferner ist ein Kontaktkörper 1 vorgesehen, der aus elektrisch leitfähigem Material besteht und der an seiner Unterseite mit dem entsprechenden leitfähigen elektrischen Teil in Verbindung gebracht werden kann. Der Kontaktkörper 1 weist zudem einen Anschlussbereich 1a für einen elektrischen Leiter auf. Ferner ist ein Isolationsteil in Form eines Gehäuses 2 aus Isolierstoff vorgesehen. Das Gehäuse 2 ist kappenartig ausgebildet. In der Montagesolllage überdeckt das Gehäuse 2 alle wesentlichen Bestandteile des Kontaktkörpers 1 mit Ausnahme des Teiles 1a und der von unten zugänglichen Anschlussmöglichkeit.

Zwischen dem Kontaktkörper 1 und dem diesen überdeckten Gehäuse 2 sind federnde Vorspannmittel 6 angeordnet. Das Spannband 7 ist durch einen Spannkopf 3 geführt, der mit seiner Unterseite in mechanischer Pressverbindung mit der Oberseite des Gehäuses 2 steht, wie beispielsweise in den Figuren 2 bis 5 gezeigt ist. Der Spannkopf 3 weist eine entsprechende Spannschraube und ein Federblech 9 als Gegenlager auf. Das Spannband 7 wird um den Kontaktkörper 1 geschlungen und mit seinem freien Ende in den entsprechenden Einsteckschlitz 10 gesteckt und gespannt und mit der Spannschraube 8 fixiert.

Zwischen dem federnden Vorspannmittel 6 und dem Kontaktkörper 1 ist ein Spannbügel 4 angeordnet. Dieser Spannbügel 4 ist mittels, das Gehäuse 2 durchgreifender Stellmittel 5, zur Erhöhung der Spannung des Spannbandes 7 vom Kontaktkörper 1 weg entgegen der Vorspannkraft der Vorspannmittel 6 verstellbar. Hierdurch kann die Vorspannkraft individuell eingestellt werden und zwar unabhängig von der Vorspannkraft, die durch das Spannband 7 aufgebracht werden kann.

Vorzugweise ist das Gehäuse 2 in der Montagesolllage mit dem Kontaktkörper 1 rastverbunden, sodass die Teile aneinander vorfixiert sind und alle dazwischen befindlichen Teile ebenfalls unverlierbar dazwischen gehalten sind.

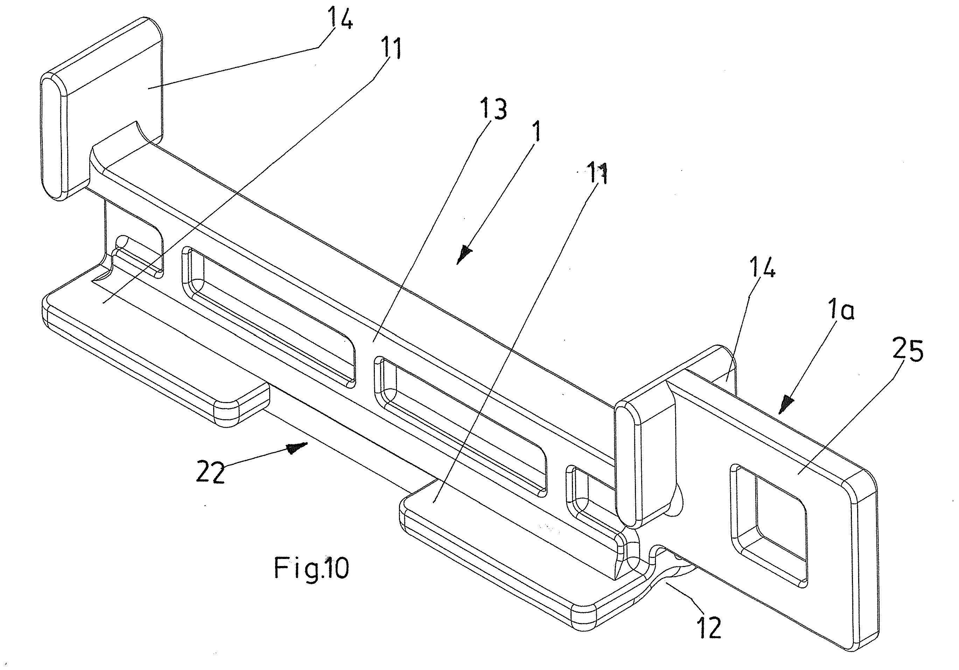

Wie insbesondere in Figur 10 gezeigt, ist der Kontaktkörper 1 im Querschnitt T-förmig ausgebildet. Der Quersteg 11 der T-Form bildet unterseitig den Anlagebereich für das elektrisch leitfähige Teil und weist vorzugsweise eine Positionierungskerbe 12 auf. Dazu rechtwinklig verläuft der Vertikalsteg 13, der in der Montagesolllage von dem Gehäuse 2 übergriffen ist. Der Vertikalsteg 13 ist zudem in der Montagesolllage von dem U-förmig ausgebildeten Spannbügel 4 übergriffen, der mit seinen Schenkeln an dem Vertikalsteg 13 verstellbar geführt ist.

An den seitlichen Enden des Vertikalsteges 13 sind jeweils Führungsstege 14 einstückig angeformt, die quer zum Vertikalsteg 13 gerichtet verlaufen und über die Oberseite des Vertikalsteges 13 entgegengerichtet zum Quersteg 11 vorragen. Zwischen den Führungsstegen 14 sind die einander gegenüberliegenden Querwände 15 des Gehäuses 2 geführt, wobei diese Querwände 15 der Querabmessung des Vertikalsteges 13 angepasste, stirnseitig auf ihrer der Oberseite des Gehäuses 2 abgewandten Randkante offen ausmündende Ausnehmungen 16 aufweisen. Nahe der Ausmündung der Ausnehmungen 16 sind an den die Ausnehmungen 16 begrenzenden Randkanten Rastvorsprünge 17 ausgebildet, die in der Montagesolllage hinter Rastkanten des Vertikalsteges 13 greifen. Außen an den Querwänden 15 sind vorragende Führungsleisten 18 ausgebildet, zwischen denen die Führungsstege 14 - in den Abbildungen vertikal gerichtet - geführt sind.

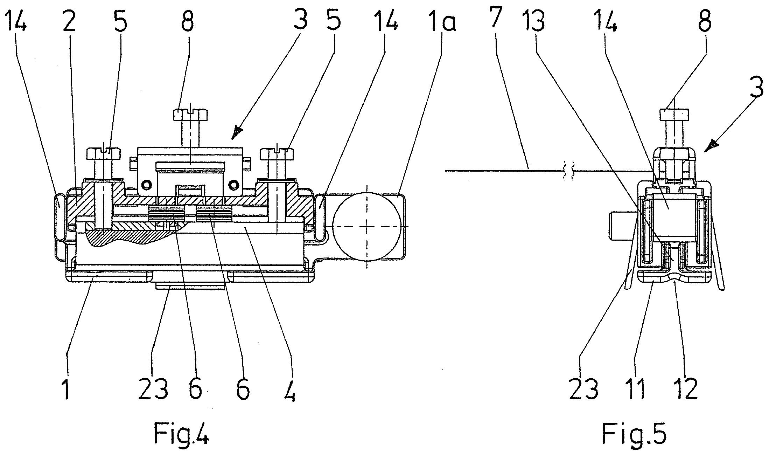

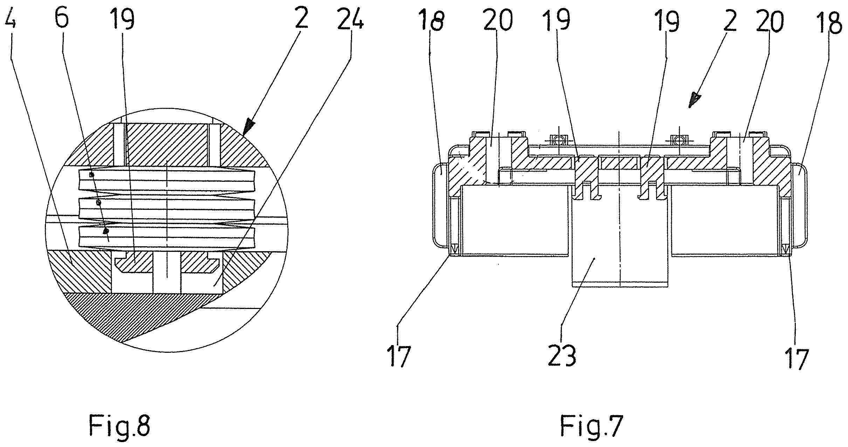

Die federnden Vorspannmittel 6 bestehen im Ausführungsbeispiel aus Tellerfederpaketen, die an Rastzapfen 19 gehalten sind, beziehungsweise auf diese aufgesteckt sind, die innenseitig von einer Oberseite des Gehäuses 2 in Richtung zum Kontaktkörper 1 abragen, wie in Figur 8 in vergrößertem Maßstab gezeigt und in kleinerem Maßstab in Figur 4 und Figur 7 verdeutlicht ist.

Als Stellmittel 5 sind Kopfschrauben vorgesehen, die entsprechende Lochungen 20 einer Oberseite des Gehäuses 2 durchgreifen und in Solllage in Gewindebohrungen 21 des Spannbügels 4 eingeschraubt sind und auch diese durchgreifen, sodass sich die dem Kopf abgewandten Enden der Kopfschrauben an dem Kontaktkörper 1 insbesondere der oberen Stirnseite des Vertikalsteges 13 abstützen.

Die Stellmittel 5 sind nahe der seitlichen Endbereiche des Kontaktkörpers 1 angeordnet, während die federnden Vorspannmittel 6 zwischen den Stellmitteln, also zwischen den Bohrungen 21 im mittleren Bereich angeordnet sind. Zusätzlich sind die Stellmittel 5 seitlich neben dem etwa mittig der Längserstreckung des Gehäuses 2 angebrachten Spannkopf 3 angeordnet, sodass die Stellmittel 5 und auch die Schraube 8 gut zugänglich und betätigbar ist.

Der Quersteg 11 der T-Form des Kontaktkörpers 1 weist jeweils mittig seiner Längserstreckung an beiden Seiten eine Ausnehmung 22 auf. Das Gehäuse 2 reicht mit seinen Seitenwänden bis zu dem Quersteg 11, wobei im Bereich der Ausnehmungen 22 ein verlängertes, nach Art eines Federarms ausgebildetes Wandteil 23 schwenkbeweglich angeordnet ist, welches über den Quersteg 11 nach unten vorragt und eine Führungsfläche für das Spannband 7 bildet, sodass dieses nicht in Kontakt mit dem Kontaktkörper 1 gerät.

Zusätzlich weist der Spannbügel 4 Durchgriffslöcher 24 auf, die einen Bewegungsfreiraum für die Rastzapfen 19 bilden, auf denen die federnden Vorspannmittel 6 erhalten sind.

An einen der Führungsstege 14 und an eine Randkante des Vertikalsteges 13 ist ein seitlich etwa parallel zum Vertikalsteg 3 abragendes Anschlussteil angeschlossen, welches den Anschlussbereich 1a bildet. Mittels beispielsweise einer Schlossschraube 26 mit Unterlegscheibe 27 und Mutter 28 kann der Anschluss mit einem elektrischen Leiter hergestellt werden, um die Banderdungsschelle entsprechend zu kontaktieren.

Die Erfindung ist nicht auf das Ausführungsbeispiel beschränkt, sondern im Rahmen dessen, was in den Ansprüchen und der Beschreibung offenbart ist, angegeben.

Alle in der Beschreibung und/oder Zeichnung offenbarten Einzel- und Kombinationsmerkmale werden als erfindungswesentlich angesehen.

### Bezugszeichenliste:

- 1: Kontaktkörper
- 1a: Ausschlussbereich
- 2: Gehäuse (isoliert)
- 3: Spannkopf
- 4: Spannbügel
- 5: Stellmittel (Schrauben)
- 6: Vorspannmittel (federnd)
- 7: Spannband
- 8: Spannschraube
- 9: Federblech
- 10: Einsteckschlitz
- 11: Quersteg
- 12: Positionskerbe
- 13: Vertikalsteg
- 14: Führungsstege
- 15: Querwand
- 16: Ausnehmungen
- 17: Rastvorsprung
- 18: Führungsleisten
- 19: Rastzapfen
- 20: Lochungen
- 21: Gewindebohrungen
- 22: Ausnehmung
- 23: Wandteil
- 24: Durchgriffslöcher
- 25: Anschlussteil
- 26: Schlossschraube
- 27: U-Scheibe
- 28: Mutter

## Patentansprüche

1. Banderdungsschelle zum Blitzschutz-Potentialausgleich für den Einsatz in explosionsgefährdeten Bereichen mit mindestens einem mechanisch spann- und arretierbaren Spannband (7), das um einen zu kontaktierenden Abschnitt eines Rohres, einer Stange oder dergleichen elektrisch leitfähigen Teiles legbar ist, einem Kontaktkörper (1), der mit dem elektrisch leitfähigen Teil in Verbindung gebracht ist oder bringbar ist und einen Anschlussbereich (1a) für einen elektrischen Leiter aufweist, und einem Isolationsteil, wobei der Kontaktkörper (1) von einem kappenartigen Gehäuse (2) als Isolationsteil überdeckt ist, welches den Teil des Kontaktkörpers (1), der mit dem leitfähigen Teil in Verbindung steht sowie mindestens den Anschlussbereich (1a) für den Leiter freilässt, wobei zwischen dem Kontaktkörper (1) und dem diesen überdeckenden Gehäuse (2) federnde Vorspannmittel (6) angeordnet sind,
wobei das Spannband (7) durch einen Spannkopf (3) geführt ist, dessen Unterseite in mechanischer Pressverbindung mit einer Oberseite des Gehäuses (2) steht, **dadurch gekennzeichnet, dass** zwischen dem federnden Vorspannmittel (6) und dem Kontaktkörper (1) ein Spannbügel (4) angeordnet ist und dass der Spannbügel (4) bei gespanntem Spannband (7) mittels das Gehäuse (2) durchgreifender Stellmittel (5) zur Erhöhung der Spannkraft des Spannbandes (7) vom Kontaktkörper (1) weg entgegen der Vorspannkraft der Vorspannmittel (6) verstellbar ist.

2. Banderdungsschelle nach Anspruch 1, **dadurch gekennzeichnet, dass** das Gehäuse (2) mit dem Kontaktkörper (1) rastverbunden ist.

3. Banderdungsschelle nach Anspruch 1 oder 2, **dadurch gekennzeichnet, dass** der Kontaktkörper (1) im Querschnitt T-förmig ausgebildet ist, wobei der Quersteg (11) der T-Form der Anlagebereich für das elektrisch leitfähige Teil, vorzugsweise mit einer Positionierungskerbe (12) ist und der dazu rechtwinklige Vertikalsteg (13) vom Gehäuse (2) übergriffen ist, wobei der Vertikalsteg (13) von dem U-förmig ausgebildeten Spannbügel (4) übergriffen ist, der mit seinen Schenkeln am Vertikalsteg (13) geführt ist.

4. Banderdungsschelle nach einem Anspruch 3, **dadurch gekennzeichnet, dass** an den seitlichen Enden des Vertikalsteges (13) jeweils Führungsstege (14) angeordnet sind, die quer zu dem Vertikalsteg (13) gerichtet verlaufen und über den Vertikalsteg (13) entgegengerichtet zum Quersteg (11) vorragen, wobei zwischen den Führungsstegen (14) Querwände (15) des Gehäuses (2) geführt sind, die der Querabmessung des Vertikalsteges (13) angepasste, stirnseitig auf ihrer der Oberseite des Gehäuses (2) abgewandten Randkante offen ausmündende Ausnehmungen (16) aufweisen,
wobei nahe der Ausmündungen der Ausnehmungen (16) an den die Ausnehmungen (16) begrenzenden Randkanten Rastvorsprünge (17) angeordnet sind, die in Montagesolllage hinter Rastkanten des Vertikalsteges (13) greifen, und wobei vorzugsweise außen an den Querwänden (15) vorragende Führungsleisten (18) ausgebildet sind, zwischen denen die Führungsstege (14) geführt sind.

5. Banderdungsschelle nach einem der Ansprüche 1 bis 4, **dadurch gekennzeichnet, dass** die federnden Vorspannmittel (6) aus Tellerfederpaketen bestehen.

6. Banderdungsschelle nach einem der Ansprüche 1 bis 5, **dadurch gekennzeichnet, dass** die federnden Vorspannmittel (6) an Rastzapfen (19) gehalten sind, die innenseitig von einer Oberseite des Gehäuses (2) in Richtung zum Kontaktkörper (1) abragen.

7. Banderdungsschelle nach einem der Ansprüche 1 bis 6, **dadurch gekennzeichnet, dass** die Stellmittel (5) Kopfschrauben sind, die entsprechende Lochungen (20) einer Oberseite des Gehäuses (2) durchgreifen und in Gewindebohrungen (21) des Spannbügels (4) diese durchgreifend eingeschraubt sind, wobei sich die dem Kopf abgewandten Enden der Kopfschrauben am Kontaktkörper (1), insbesondere der Stirnseite eines Vertikalsteges (13) eines T-förmigen Kontaktkörpers (1), abstützen.

8. Banderdungsschelle nach einem der Ansprüche 1 bis 7, **dadurch gekennzeichnet, dass** die Stellmittel (5) nahe der seitlichen Endbereiche des Gehäuses (2) angeordnet sind und die federnden Vorspannmittel (6) zwischen den Stellmitteln (5) angeordnet sind.

9. Banderdungsschelle nach einem der Ansprüche 1 bis 8, **dadurch gekennzeichnet, dass** die Stellmittel (5) seitlich neben dem etwa mittig der Längserstreckung des Gehäuses (2) angebrachten Spannkopf (3) angeordnet sind.

10. Banderdungsschelle nach einem der Ansprüche 3 bis 9, **dadurch gekennzeichnet, dass** der Quersteg (11) der T-Form des Kontaktkörpers (1) jeweils mittig seiner Längserstreckung eine Ausnehmung (22) aufweist, dass das Gehäuse (2) mit seinen Seitenwänden bis zu dem Quersteg (11) reicht und im Bereich der Ausnehmungen (22) einen verlängerten nach Art eines Federarms ausgebildeten Wandteil (23) aufweist, der bis über den Quersteg (11) vorragt und eine Führungsfläche für das Spannband (7) bildet.

11. Banderdungsschelle nach einem der Ansprüche 6 bis 10, **dadurch gekennzeichnet, dass** der Spannbügel (4) Durchgriffslöcher (24) aufweist, die einen Bewegungsfreiraum für die Rastzapfen (19) bilden, auf denen die federnden Vorspannmittel (6) gehalten sind.

12. Banderdungsschelle nach einem der Ansprüche 4 bis 11, **dadurch gekennzeichnet, dass** an einem der Führungsstege (14) und dem Vertikalsteg (13) ein seitlich etwa parallel zum Vertikalsteg (13) abragendes Anschlussteil (25) angeschlossen oder angeformt ist, das den Anschlussbereich (10) für den elektrischen Leiter aufweist.

## Claims

1. A belt grounding clamp for lightning protection / potential equalization for use in areas at risk of explosion with at least one mechanically tensionable and lockable tensioning belt (7) that can be fitted around a section of a tube to be contacted, a bar or the like electrically conductive part, a contact body (1) that is or can be brought into connection with the electrically conductive part and includes a terminal portion (1a) for an electrical conductor, and an isolation portion, the contact body (1) being covered by a cap-like housing (2) as the isolation portion, which leaves free the part of the contact body (1) that is in connection with the conductive part, and at least the terminal portion (1a) for the conductor, between the contact body (1) and the housing (2) covering the same resilient pre-tensioning means (6) being disposed, the tensioning belt (7) being guided through a tensioning head (3), the lower side of which is in a mechanical pressing connection with an upper side of the housing (2), **characterized by that** between the resilient pre-tensioning means (6) and the contact body (1), a tensioning bracket (4) is disposed and that the tensioning bracket (4) can be adjusted, when the tensioning belt (7) is tensioned, by means of adjusting means (5) penetrating the housing (2) for increasing the tensioning force of the tensioning belt (7) away from the contact body (1) against the pre-tensioning force of the pre-tensioning means (6).

2. The belt grounding clamp according to claim 1, **characterized by that** the housing (2) is connected by latching with the contact body (1).

3. The belt grounding clamp according to claim 1 or 2, **characterized by that** the contact body (1) has a T-shaped cross-section, the cross web (11) of the T-shape being the contact portion for the electrically conductive part, preferably having a positioning notch (12) and the respective vertical web (13) at right angles thereto being overlapped by the housing (2), the vertical web (13) being overlapped by the U-shaped bracket (4) that is guided with its legs at the vertical web (13).

4. The belt grounding clamp according to claim 3, **characterized by that** at the side ends of the vertical web (13) respective guide webs (14) are disposed that extend transversely to the vertical web (13) and project beyond the vertical web (13) as opposed to the cross web (11), between the guide webs (14) transversal walls (15) of the housing (2) being guided that include recesses (16) adapted to the transversal dimension of the vertical web (13), openly terminating at the front side on their edge of the housing (2) facing away from the upper side, close to the terminations of the recesses (16), at the edges limiting the recesses (16), latching projections (17) being disposed that, in the intended mounting position, engage behind latching edges of the vertical web (13), and preferably, outside at the transversal walls (15), projecting guide ledges (18) being formed, between which the guide webs (14) are guided.

5. The belt grounding clamp according to one of claims 1 to 4, **characterized by that** the resilient pre-tensioning means (6) consist of packs of plate springs.

6. The belt grounding clamp according to one of claims 1 to 5, **characterized by that** the resilient pre-tensioning means (6) are held at latching bolts (19) that extend at the inner side from an upper side of the housing (2) towards the contact body (1).

7. The belt grounding clamp according to one of claims 1 to 6, **characterized by that** the adjusting means (5) are head screws that pass through corresponding holes (20) of an upper side of the housing (2) and are screwed into threaded holes (21) of the tensioning bracket (4) passing through the same, the ends of the head screws facing away from the head being supported at the contact body (1), in particular the front side of a vertical web (13) of a T-shaped contact body (1).

8. The belt grounding clamp according to one of claims 1 to 7, **characterized by that** the adjusting means (5) are disposed close to the side end sections of the housing (2), and the resilient pre-tensioning means (6) are disposed between the adjusting means (5).

9. The belt grounding clamp according to one of claims 1 to 8, **characterized by that** the adjusting means (5) are disposed beside the tensioning head (3) mounted approximately centrally in the longitudinal extension of the housing (2).

10. The belt grounding clamp according to one of claims 3 to 9, **characterized by that** the cross web (11) of the T-shape of the contact body (1) includes respectively centrally in its longitudinal extension a recess (22), that the housing (2) extends with its side walls to the cross web (11) and includes, in the section of the recesses (22), an extended wall portion (23) formed in the manner of a spring arm that projects beyond the cross web (11) and forms a guiding surface for the tensioning belt (7).

11. The belt grounding clamp according to one of claims 6 to 10, **characterized by that** the tensioning bracket (4) includes through-holes (24) representing a free movement space for the latching bolt (19), where the resilient pre-tensioning means (6) are held.

12. The belt grounding clamp according to one of claims 4 to 11, **characterized by that** at one of the guide webs (14) and the vertical web (13), a connection part (25) projecting sideways approximately in parallel to the vertical web (13) is connected or formed that includes the terminal portion (10) for the electrical conductor.

## Revendications

1. Collier de serrage de mise à la terre de protection contre la foudre/équilibrage de potentiel pour l'utilisation dans des zones exposées à un risque d'explosion avec au moins une bande de serrage (7) qui peut être tendue et arrêtée mécaniquement et peut être posée autour d'une section d'un tube à être contacté, une tige ou semblable pièce électriquement conductrice, un corps de contact (1) qui est ou peut être mis en relation avec la pièce électriquement conductrice et comporte une partie de raccordement (1a) pour un conducteur électrique, et une partie d'isolation, le corps de contact (1) étant recouvert d'un boîtier (2) en forme de calotte comme partie d'isolation, qui laisse libre la partie du corps de contact (1) qui est en relation avec la pièce conductrice, et au moins la partie de raccordement (1a) pour le conducteur, entre le corps de contact (1) et le boîtier (2) recouvrant celui-ci, des moyens de pré-serrage (6) élastiques étant disposés, la bande de serrage (7) étant guidée à travers une tête de serrage (3), le côté inférieur de laquelle étant en relation de compression mécanique avec un côté supérieur du boîtier (2), **caractérisé en ce qu'**entre les moyens de pré-serrage (6) élastiques et le corps de contact (1), un étrier de serrage (4) est disposé et que l'étrier de serrage (4) peut être réglé, si la bande de serrage (7) est tendue, par des moyens de réglage (5) pénétrant le boîtier (2) pour augmenter la force de serrage de la bande de serrage (7) en éloignement du corps de contact (1) contre la force de pré-serrage des moyens de pré-serrage (6).

2. Collier de serrage de mise à la terre selon la revendication 1, **caractérisé en ce que** le boîtier (2) est lié par encliquetage avec le corps de contact (1).

3. Collier de serrage de mise à la terre selon la revendication 1 ou 2, **caractérisé en ce que** le corps de contact (1) présente une section transversale en forme de T, l'entretoise transversale (11) de la forme de T étant la partie de contact pour la pièce électriquement conductrice, de préférence avec une encoche de positionnement (12), et l'entretoise verticale (13) respective perpendiculaire étant chevauchée par le boîtier (2), l'entretoise verticale (13) étant chevauchée par l'étrier en U (4) qui est guidé avec ses jambes à l'entretoise verticale (13).

4. Collier de serrage de mise à la terre selon la revendication 3, **caractérisé en ce qu'**aux extrémités latérales de l'entretoise verticale (13), des entretoises de guidage (14) respectives sont disposées qui s'étendent transversalement à l'entretoise verticale (13) et font saillie au-delà de l'entretoise verticale (13) en opposition à l'entretoise transversale (11), entre les entretoises de guidage (14), des parois transversales (15) du boîtier (2) étant guidées qui comportent des évidements (16) adaptés à la dimension transversale de l'entretoise verticale (13), débouchant de façon ouverte au front de leur arête du boîtier (2) en vis-à-vis du côté supérieur, proche des terminaisons des évidements (16), aux arêtes délimitant les évidements (16), des ergots d'encliquetage (17) étant disposés qui, dans la position de montage de consigne, s'engagent derrière des arêtes d'encliquetage de l'entretoise verticale (13), et de préférence, à l'extérieur des parois transversales (15), des lames de guidage (18) en saillie étant formées, entre lesquelles les entretoises de guidage (14) sont guidées.

5. Collier de serrage de mise à la terre selon une des revendications 1 à 4, **caractérisé en ce que** les moyens élastiques de pré-serrage (6) consistent en des paquets de rondelles Belleville.

6. Collier de serrage de mise à la terre selon une des revendications 1 à 5, **caractérisé en ce que** les moyens élastiques de pré-serrage (6) sont retenus à des tenons d'encliquetage (19) qui s'étendent à l'intérieur à partir d'un côté supérieur du boîtier (2) vers le corps de contact (1).

7. Collier de serrage de mise à la terre selon une des revendications 1 à 6, **caractérisé en ce que** les moyens de réglage (5) sont des vis à tête qui traversent des trous (20) correspondants d'un côté supérieur du boîtier (2) et sont vissées dans des trous filetés (21) de l'étrier de serrage (4) traversant ceux-ci, les extrémités des vis à tête en vis-à-vis de la tête étant retenues au corps de contact (1), en particulier au front d'une entretoise verticale (13) d'un corps de contact (1) en T .

8. Collier de serrage de mise à la terre selon une des revendications 1 à 7, **caractérisé en ce que** les moyens de réglage (5) sont disposés proche des sections d'extrémité latérales du boîtier (2), et les moyens élastiques de pré-serrage (6) sont disposés entre les moyens de réglage (5).

9. Collier de serrage de mise à la terre selon une des revendications 1 à 8, **caractérisé en ce que** les moyens de réglage (5) sont disposés à côté de la tête de serrage (3) montée environ centralement dans l'étendue longitudinale du boîtier (2).

10. Collier de serrage de mise à la terre selon une des revendications 3 à 9, **caractérisé en ce que** l'entretoise transversale (11) de la forme en T du corps de contact (1) comporte respectivement centralement dans son étendue longitudinale un évidement (22), que le boîtier (2) s'étend avec ses parois latérales jusqu'à l'entretoise transversale (11) et comporte, dans la section des évidements (22), une partie de paroi (23) de forme allongée est réalisée de façon d'un bras ressort qui fait saillie au-delà de l'entretoise transversale (11) et constitue une surface de guidage pour la bande de serrage (7).

11. Collier de serrage de mise à la terre selon une des revendications 6 à 10, **caractérisé en ce que** l'étrier de serrage (4) comporte des trous traversants (24) constituant un espace de mouvement libre pour te tenon d'encliquetage (19), où les moyens élastiques de pré-serrage (6) sont retenus.

12. Collier de serrage de mise à la terre selon une des revendications 4 à 11, **caractérisé en ce qu'**à une des entretoises de guidage (14) et l'entretoise verticale (13), une pièce de raccordement (25) faisant saillie latéralement environ en parallèle à l'entretoise verticale (13) est liée ou formée qui comporte la partie de raccordement (10) pour le conducteur électrique.
